## Europäisches Patentamt
## European Patent Office
## Office européen des brevets

(19)

(11) Veröffentlichungsnummer: **0 140 174**
**B1**

(12) # EUROPÄISCHE PATENTSCHRIFT

(45) Veröffentlichungstag der Patentschrift:
16.12.87

(51) Int. Cl.⁴: **G 21 C 17/00**, G 01 N 29/00

(21) Anmeldenummer: **84111570.2**

(22) Anmeldetag: **27.09.84**

(54) **Verfahren zum Ermitteln einer Leckstelle an druckführenden Behältern und Einrichtung dazu.**

(30) Priorität: **05.10.83 DE 3336245**

(43) Veröffentlichungstag der Anmeldung:
**08.05.85 Patentblatt 85/19**

(45) Bekanntmachung des Hinweises auf die Patenterteilung:
**16.12.87 Patentblatt 87/51**

(84) Benannte Vertragsstaaten:
**BE CH DE FR GB IT LI NL SE**

(56) Entgegenhaltungen:
**FR-A-2 262 303
FR-A-2 304 088
FR-A-2 344 824
US-A-3 545 262
US-A-3 713 127**

**TECHNISCHES MESSEN, Band 47, Nr. 12, Dezember 1980, Seiten 435-440, München, DE; J. KASSER et al.: "Prüfung industrieller Bauteile mit Hilfe der Schallemissionsanalyse"**

(73) Patentinhaber: **Siemens Aktiengesellschaft Berlin und München, Wittelsbacherplatz 2, D-8000 München 2 (DE)**

(72) Erfinder: **Leuker, Wilhelm, Dipl.- Phys., D-8551 Gosberg Nr.81 (DE)**
Erfinder: **Stipsits, Günter, Poxdorfer- Strasse 10, D-8524 Neunkirchen/Brand (DE)**
Erfinder: **Thiel, Bernhard Dr.rer.nat.Dipl.- Phys., Poststrasse 13A, D-8550 Forchheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Ermitteln einer Leckstelle an druckführenden Behältern mit mehreren Sonden die auf Wände des Behälters aufgesetzt sind und hochfrequente Schallgeräusche aufnehmen, aus denen mit Hilfe eines Versträrkes ein Effektivwert gebildet wird, der mit einem Schwellwert verglichen wird und bei dessen Überschreitung ein Signal gegeben wird. Sie umfaßt ferner eine dazu besonders geeignete Einrichtung.

Bei dem aus der DE-A-28 48 702 bekannten Verfahren sind zwar an dem Primärkreis eines Druckwasserreaktors mehrere Sonden dargestellt. Sie dienen jedoch nur dazu, die Tatsachen eines Lecks an sich anzuzeigen, so daß es danach noch erforderlich ist, mit bekannten Verfahren, zum Beispiel durch einen Kontrollgang des Bedienungspersonals, die Leckstelle zu ermitteln. Dies kann zeitaufwendig sein und dazu führen, daß größere Leckagen auftreten, bevor die Leckstelle ermittelt ist.

Die Erfindung geht demgegenüber von der Aufgabe aus, den Ort der Leckage schnell und sicher zu ermitteln. Zu diesem Zweck ist erfindungsgemäß vorgesehen, daß zur Ortung der Leckstelle die Körperschallgeräusche von mindestens zwei Sonden miteinander verglichen werden, daß der Effektivwert der Körperschallgeräusche aus dem Vergleich zum Abstand der Sonden in Beziehung gesetzt wird, und daß aus dieser Beziehung der Ort des maximalen Körperschallgeräusches als Leckstelle ermittelt wird.

Die erfindungsgemäße Ortung der Leckstelle beruht darauf, daß die Körperschallgeräusche bei ihrer Ausbreitung von der Leckstelle über die Behälterwände eine Dämpfung erfahren. Die Dämpfung ist frequenzabhängig. Sie kann insbesondere mit einem Mikrocomputer in einer Beziehung zum Abstand zwischen den Sonden gesetzt werden. Daraus läßt sich der Ort des maximalen Geräusches ermitteln, an dem die Schallquelle, d.h. das Leck, liegen muß. Praktische Versuche haben gezeigt, daß damit die Lage von Leckstellen bis auf einige Prozent des Abstandes zwischen den Sonden genau bestimmt werden kann.

Die Erfindung wird vorteilhaft so ausgeführt, daß die Körperschallgeräusche zum Vergleich digitalisiert werden. Dies erleichtert die Weiteverarbeitung mit Mikrocomputern, im Prinzip ist aber auch eine Verarbeitung analoger Werte möglith.

Besonders genaue Ortungen lassen sich in der Weise durchführen, daß die Körperschallgeräusche im Vergleich zu einem Hintergrundrauschen ermittelt werden, das mindestens über 10 Minuten gemittelt wird. Hier wird also nicht der Absolutwert des Körperschallgeräusches sondern sein Anstieg gegenüber dem Hintergrundrauschen ermittelt, das seinerseits als Mittelwert bestimmt wird. Mit einem solchen Kittelwert kann man den Ansprechpegel kleiner halten, als wenn man ihn als Absolutwert feststellen wollte. Außerdem kann man bei der Feststellung des Mittelwertes Daten gewinnen, die für die Bestimmung des Lecks nach Größe und Lage vorteilhaft verwendet werden können.

Mit Behälter ist bei der Erfindung nicht nur ein Tank mit einfacher Raumform im üblichen Sinne gemeint, sondern auch Systeme mit dazwischen liegenden Rohrleitungen, wie sie zum Beispiel zu dem Kühlmittelkreis eines Kernreaktors gehören. Die Erfindung kann sich aber auch auf Leitungssysteme chemischer Anlagen oder dergleichen beziehen. Bei allen Systemen kann man vorteilhaft so vorgehen, daß mindestens drei Sonden eines Behältersystems über eine Ringleitung miteinander verbunden werden und daß über die Ringleitung ein Alarmgeber zweifach angeregt wird.

Eine besonders genaue Auswertung kann man dadurch erhalten, daß der Vergleich für unterschiedliche Frequenzen getrennt durchgeführt und der dabei ermittelte Ort gemittelt wird. Dabei wird nämlich ausgenutzt, daß die Dämpfung des Körperschalls in den Behälterwänden frequenzabhängig ist. Deshalb gewinnt man aus einem Vergleich der Dämpfung für unterschiedliche Frequenzen mehrere Lokalisierungen, die in ihrer Summe eine wechselseitige Korrektur ermöglichen.

Bei dem Verfahren nach der Erfindung kann man vorteilhaft so vorgehen, daß der Vergleich gegenüber einem oberen festen und einem unteren und einem oberen gleitenden Schwellwert vorgenommen wird. Mit diesen mehrfachen Vergleichen wird gegenüber dem aus der DE-A-28 48 702 bekannten Vergleich mit einem oberen Schwellwert auch der Fall erfaßt, daß langsame Anstiege über eine längere Zeit vorliegen. Der untere Schwellwert überwacht die Betriebsfähigkeit des Systems.

Bei einer wichtigen Ausführungsform der Erfindung ist vorgesehen, daß die Sonden in definierten Zeitabständen durch ein bekanntes Schallsignal angeregt und anhand dieser Anregung kalibriert werden. Damit werden Zustandsänderungen der empfindlichen Sonden erfaßt und ausgeglichen. Die Kalibrierung kann zum Beispiel einmal in 24 Stunden erfolgen, insbesondere dann, wenn eine Überwachungselektronik vorgesehen ist, die eine solche Kalibrierung automatisch vornimmt. Den einzelnen Sonden werden dabei Korrekturfaktoren zugeordnet, mit denen ihre Signale bei der anschließenden Auswertung multipliziert werden.

Eine weitere Vervollkommnung der Erfindung ist dadurch möglich, daß die kalibrierten Sonden durch ein räumlich definiertes Schallsignal angeregt werden und daß eine Ortung der Anregungsstelle vorgenommen wird. Hierbei wird anhand des räumlich definierten Schallsignals die Übereinstimmung der Ortung durch die Sonden einschließlich der Auswertungselektronik überprüft. Die Überprüfung kann ebenfalls zum Beispiel einmal in 24 Stunden erfolgen. Damit ist es auch möglich, ausfallende Sonden so schnell festzustellen, daß die Betriebssicherheit des Systems gewährleistet ist, insbesondere dann, wenn das System eine größere Zahl von Sonden umfaßt, so daß eine Redundanz gegeben ist.

Bei der Verwirklichung der Erfindung ist es wichtig, daß die Hintergrundgeräusche möglichst gering gehalten werden. Aus diesem Grunde ist es für den Fall, daß die Leckermittlung an einem Kernreaktor mit einer Hauptkühlmittelpumpe vorgenommen wird, vorteilhaft, wenn die Hauptkühlmittelpumpe bei der Ermittlung der Körperschallgeräusche abgeschaltet wird. Damit läßt sich nämlich der Geräuschpegel wesentlich verringern, so daß die Empfindlichkeit gesteigert wird. Versuche haben gezeigt, daß mit der gesteigerten Empfindlichkeit Leckraten von unter 30 kg/h feststellbar sind, während bei laufender Pumpe mit Sicherheit Leckraten bis etwa 100 kg/h festgestellt werden konnten. Dies gilt insbesondere für Kernreaktoren mit mehreren Kühlmittelschleifen, bei denen das Abschalten der Hauptkühlmittelpumpe in einer Schleife ohne Beeinträchtigung des Betriebes möglich ist.

Eine Einrichtung zum Ermitteln einer Leckstelle an einem druckführenden Behälter durch mehrere Sonden, die auf Wände des Behälters aufgesetzt sind und Schallgeräusche aufnehmen, ist aus dem Aufsatz von J. Kasser et al., "Prüfung industrieller Bauteile mit Hilfe der Schallemissionsanalyse" veröffentlicht in Technisches Messen, Band 47, Nr. 12, Dezember 1980, Seiten 435 bis 440, bekannt. Dabei sind an einem Prüfling angeordnete Sonden über Vorverstärker mit einem Voltmeter verbunden, das einen Effektivwert der empfangenen Signale bildet. In einer Datenverarbeitungsanlage werden die Effektivwerte der verstärkten Ausgangspotentiale der Sonden analysiert. Das gestattet Rückschlüsse auf die Ursachen der Schallemission. Durch das Bestimmen der Eintreffzeiten von Schallwellen an den Sonden ist es darüber hinaus möglich, den Ort der Schallquelle näherungsweise zu berechnen.

Die Einrichtung zur Ausübung des Verfahrens nach der Erfindung gestattet hingegen den Ort einer Leckage an einem druckführenden Behälter schnell und sicher zu ermitteln. Dabei wird ausgenutzt, daß der Körperschall in Behälterwänden gedämpft wird. Aus einem Vergleich der Dämpfung für unterschiedliche Frequenzen gewinnt man mehrere Lokalisierungen, die eine wechselseitige Korrektur ermöglichen.

Als Einrichtung zur Ausübung des Verfahrens nach der Erfindung ist vorgesehen, daß die Ausgänge der Aufnehmer über eine Ringleitung miteinander und mit einer Kopfstation verbunden sind, daß die Kopfstation als Datenverarbeitungsanlage eine Auswerteelektronik umfaßt, in der die Effektivwerte zu vergleichen und zum bekannten Abstand der Sonden in Beziehung zu setzen sind und daß die Auswerteelektronik mindestens einen Speicher zur Bildung eines Langzeitmittelwertes umfaßt und mit einem Schreiber zur Ausgabe des Ortes der Leckstelle verbunden ist.

Je größer die zu überwachenden Behälter sind, umso größer macht man zweckmäßigerweise auch die Zahl der Sonden. Ihr Abstand sollte nicht wesentlich größer als etwa 10 m sein. Dann erreicht man eine Genauigkeit der Leckortung von ca. 1 m.

Die Verarbeitung der Leckgeräusche kann in einer entfernten Station vorgenommen werden. Diese ist bei der Einrichtung zur Durchführung des erfindungsgemäßen Verfahrens mit den Ausgängen aller vorhandenen Sonden über eine Ringleitung verbunden. Für jede Sonde stehen also zwei getrennte Verbindungswege zu einer Kopfstation, die die Auswerteelektronik enthält, zur Verfügung. Dadurch wird die Ausfallsicherheit vorteilhaft verbessert.

Die Ringleitung überträgt vorzugsweise die digitalisierten Werte im Zeit-Multiplex. Zusätzlich kann aber auch eine Übertragung analoger Werte als Alarmsignal vorgesehen sein, um bei einem Ausfall der Datenumsetzung noch eine Anzeige zu erhalten.

In der Auswerteelektronik werden die ihr zugeführten Effektivwerte mit den bekannten Abständen zwischen den Sonden am Behälter verknüpft. Daraus läßt sich der Ort des maximalen Geräusches ermitteln. Dieser Ort stimmt, wie Versuche gezeigt hhaben, mit der Leckstelle weitgehend überein.

Besonders genau ist die Leckstelle zu ermitteln, falls die Orte des maximalen Geräusches für unterschiedliche Schallfrequenzen getrennt ermittelt werden und dann als Leckstelle der geomemetrische Mittelpunkt dieser Orte bestimmt wird.

Der Speicher zur Bildung des Langzeitmittelwertes wird für die gleitende Schwelle verwendet, die den Abstand gegenüber dem sich möglicherweise ändernden Betriebsgeräusch definiert. Außerdem kann der Speicher dazu dienen, im Fall eines Lecks die "Vorgeschichte" bzw. die Änderung des Leckgeräusches zu dokumentieren. Durch einen Schreiber wird der ermittelte Ort der Leckstelle ausgedruckt.

Mit der Einrichtung zur Ausübung des erfindungsgemäßen Verfahrens zum Ermitteln einer Leckstelle an druckführenden Behältern ist der Ort einer Leckage schnell und mit nur kleinen Abweichungen zu ermitteln.

Zur näheren Erläuterung der Erfindung wird anhand der beiliegenden Zeichnung ein Ausführungsbeispiel beschrieben. Dabei zeigt die Fig. 1 einen Teil des Primärkreises eines Druckwasserreaktors, die Fig. 2 eine schematische Darstellung der Leckortungseinrichtung, der Fig. 3 ein Blockschaltbild mit den wesentlichen Elementen einer erfindungsgemäßen Einrichtung, die Fig. 4 eine genauere Darstellung der bei dem Verfahren nach der Erfindung benutzten Sonden und Auswertungseinrichtungen und die Fig. 5 eine Darstellung der Meßwerte und ihrer Verarbeitung zur Ortung eines simulierten Leckagegeräusches, wie es zur Kalibrierung benutzt wird.

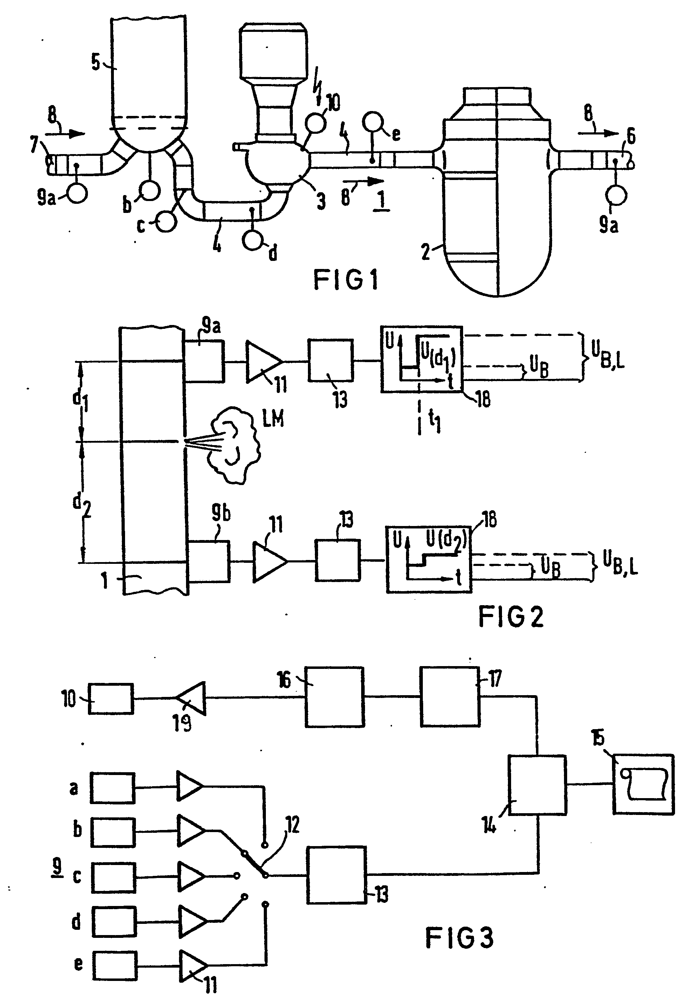

Der in Fig. 1 in einer Seitenansicht dargestellte Primärkreis 1 eines Druckwasserreaktors umfaßt einen Reaktordruckbehälter 2, in dem der nicht weiter dargestellte Reaktorkern untergebracht ist. Er wird mit unter Druck stehendem Wasser gekühlt, das von einer Hauptkühlmittelpumpe 3 über Rohrleitungen 4 durch einen Dampferzeuger 5 geführt wird. In dem nicht vollständig dargestellten Dampferzeuger 5 gibt das im Reaktorkern erhitzte Druckwasser seine Wärme an Speisewasser ab, das damit verdampft wird. Der Dampf treibt dann eine Turbine für einen Generator an.

Die Pumpe 3 sitzt im sogenennten kalten Strang des Kernreaktors, da der Dempferzeuger 5 über die Leitungsenden 6 und 7, die entgegen der Darstellung in der Fig.1 miteinander verbunden sind, in Richtung der Pfeile 8 unmittelbar beaufschlagt wird.

An dem Primärkreis 1 sind fünf Sonden 9 angeordnet, die mit den Buchstaben a bis e bezeichnet sind. Die Sonden 9 sind in gleicher Weise ausgebildet. Sie umfassen piezoelektrische Aufnehmer, die über einen Wellenleiter mit der Wandung des Primärkreises 1 verbunden sind. Es handelt sich um breitbandige Aufnehmer, die für ein Frequenzspektrum von 100 bis 800 kHz ausgelegt sind. Der Wellenleiter ist ein Metallstab von zum Beispiel 4 mm Durchmesser und 30 mm Länge, der über ein konisches Endstück mit dem Aufnehmer verbunden ist. Die Verbindung wird durch eine Druckvorspannung hergestellt, die den Wellenleiter zugleich gegen die Wand des Primärkreises 1 drückt.

Am Primärkreis 1 ist ferner ein elektroakustischer Sender 10 angebracht, der ein definiertes Signal zur Kalibrierung liefern kann, des en einer definierten Stelle, nämlich am Gehäuse der Hauptkühlmittelpumpe 3 eingebracht wird.

Die Fig. 2 zeigt in einem Schema die Anordnung von zwei Sonden 9a und 9b an der Wand des Primärkühlkreises 1. Zwischen den Sonden 9a und 9b ist eine Leckstelle L mit einer Leckrate M angedeutet. Sie ist von der Sonde 9a um die Distanz $d_1$ und von der Sonde 9b um die Distanz $d_2$ entfernt. Der Sondenabstand $d_1 + d_2$ beträgt zum Beispiel 10 m. Die Sondenausgänge speisen über Vorverstärker 11 effektivwertbildende Voltmeter 13. Die Voltmeter 13 zeigen, wie bei 18 dargestellt ist, ein Ansteigen des Geräusches mit Beginn der Leckage zum Zeitpunkt $t_1$. Der Betrag der Erhöhung des Geräusches, d.h. die Effektivwertänderung der Voltmeter 13, ist abhängig von der Distenz der Leckstelle von den Aufnehmern 91, 9b, weil das als Körperschall zu den Sonden 9a, 9b gelangende Geräusch in der Wend gedämpft wird. Der Aufnehmer 9a mit der kürzeren Entfernung liefert ein stärkeres Signal U ($d_1$) als der weiter entfernte Aufnehmer 9b mit dem Signal U ($d_2$).

In der Fig. 2 ist der Betriebsuntergrund des Leckgeräusches, d.h. der im Normalbetrieb vorhandene Geräuschpegel, mit $U_B$ bezeichnet, der bei $t_1$ mit dem Beginn der Leckege auftretende Geräuschwerte $U_{B,L}$ setzt sich aus dem Untergrundgeräusch $U_B$ und dem vom Leck L herrührenden Zusetzgeräusch zusammen.

Die Fig. 3 zeigt, daß die Sonden 9a bis 9e mit Breitbandverstärkern 11 ausgerüstet sind. Die Verstärker 11 der Sonden 9 sind über einen Kanalumschalter 12 mit dem Effektivvoltmeter 13 verbunden, dessen Ausgang an eine Datenverarbeitungsanlage 14 angeschlossen ist. Der Verstärker 19 Senders 10 ist über einen Impulsformer 16 mit einem binären Rauschgenerator 17 verbunden, der zu bestimmten Zeitpunkten von der Datenverarbeitungsanlage 14 angesteuert wird. Die Datenverarbeitungsanlage 14 hat als Ausgabe einen Schreiber 15. Der Schreiber 15 kann euch magnetische Aufzeichnungen umfassen.

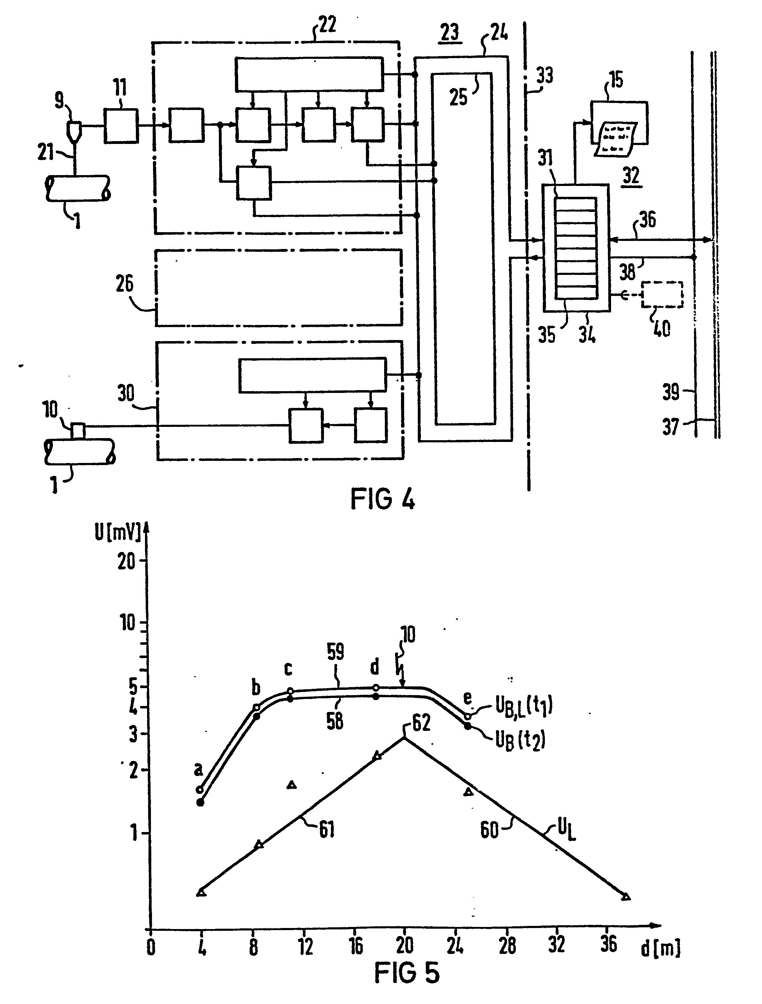

In Fig. 4 ist mit mehr Einzelheiten zu sehen, daß jede Sonde 9 über einen Wellenleiter 21 mit dem Primärkreis 1 verbunden ist, der die Behälterwand darstellt. Die Sonde 9 ist über einen Verstärker 11 mit 40 dB mit einem durch die strichpunktierte Linie 22 angedeuteten Baustein verbunden. Er umfaßt eine Steuerelektronik, insbesondere zur getekteten Abfrage der Sonde 9, eine Analogverknüpfung und eine Digitelisierung, deren Werte in eine doppelte Ringleitung 23 mit den Ringen 24 und 25 gegeben werden. Die Ringleitung 23 ist mit jeder der Sonden 9 verbunden, gegebenefalls mit einer Bündelung, bei der mehrere Sonden 9 mit ihren Bausteinen 22 zu einer Ringstation zusemmengefaßt sind, wie bei 26 angedeutet ist.

Der Ring 24 der Ringleitung 23 ist zweipolig ausgeführt. Er dient zur digitalen Datenübertragung. Der Ring 25 überträgt vier analoge Signalwerte und zwei Alarmwerte.

An die Ringleitung 23 ist ferner mindestens eine Kalibriereinheit 30 angeschlossen. Sie umfaßt den Sender 10, der zur Abgabe nach Frequenz und Amplitude definierter Schallsignale vorgesehen ist. Mit zwei räumlich distanzierten Sendern 10 kenn man die Ortungsfunktion aber noch wesentlich genauer überprüfen.

Die Ringleitung 23 führt zu einer Kopfstation 32, die außerhalb des den Primärkreis 1 einschließenden Sicherheitsbehälters liegt, der durch die strichpunktierte Linie 33 angedeutet ist. Die Kopfstation 32 umfaßt eine digitale Auswerteelektronik 34 mit Speichern 35 und einen Mikroprozessor 31, der den Schreiber 15 steuert. Mit der Auswerteelektronik 34 ist über eine Leitung 36 eine Schiene 37 verbunden, die zu einem Diagnosesystem führt. Eine Leitung 38 führt zu einer weiteren Schiene 39, die der Leittechnik des Kernkraftwerkes zugeordnet ist, das den Druckwasserreaktor umfaßt. An die Auswerteelektronik ist ein mobiles Bedienungstableau 40 anschließber.

Zur Kalibrierung werden die Meßwerte aller Sonden 9 miteinender verglichen, die sich beim Arbeiten des Senders 10 ergeben. Sie sind wegen der verschiedenen Entfernungen d zwischen Sonden 9 und Sender 10 unterschiedlich. Aus ihnen wird eine Bezugsgröße gebildet, auf die die Sonden 9 mit einem Kalibrierfaktor abgeglichen werden.

In der Fig. 5 ist in einem Diagramm mit Effektivwerten U in mV auf der logerithmisch geteilten Ordinate über dem Abstand d in m auf der linear geteilten Abszisse dargestellt, daß die Betriebsgeräusche $U_B (t_2)$ in den fünf Sonden 9a bis e einen Effektivwert ergeben, der im Bereich zwischen 1 und 5 mV Ausgangsspannung liegt, wie die vollen Meßpunkte der Kurve 58 zeigen. Dem Betriebsgeräusch ist zur Simulierung eines Lecks mit dem Sender 10 ein hochfrequentes Signal überlagert, wie es bei einem Leck entstehen würde. Daraus ergeben sich die mit den Kreisen gezeichneten höheren Meßwerte $U_{B,L} (t_1)$ der Kurve 59. Aus der Wurzel der Differenz der Quadrate der Meßwerte erhält man dann das reine Sendesignal $U_L = \sqrt{U^2_{B,L} - U^2_B}$. Dieses Sendesignal ist exponentiell ortsabhängig und ergibt bei der gezeichneten halblogarithmischen Auftragung zwei zueinander winkllge Geraden 60, 61. Ihr Schnittpunkt 62 zeigt den Ort der simulierten Leckstelle L.

Für den Fall eines echten Lecks gewinnt man entsprechende Geraden 60, 61 zur Ortung des Lecks aus dem Körperschallgeräuschen, die durch die aus dem Leck austretende Flüssigkeit angeregt werden. Dabei kann die Genauigkeit der Ortung noch durch Mehrfachmessungen bei unterschiedlichen Frequenzen gesteigert werden, weil die zur Ortung benutzte Dämpfung der Körperschellgeräusche frequenzabhängig ist.

**Patentansprüche**

1. Verfahren zum Ermitteln einer Leckstelle en druckführenden Behältern mit mehreren Sonden, die euf Wände des Behälters aufgesetzt sind und hochfrequente Schallgeräusche aufnehmen, aus denen mit Hilfe eines Verstärkers ein Effektivwert gebildet wird, der mit einem Schwellwert verglichen wird und bei dessen Überschreitung ein Signal gegeben wird, dadurch gekennzeichnet, daß zur Ortung der Leckstelle die Körperschellgeräusche von mindestens zwei Sonden miteinander verglichen werden, daß der Effektivwert der Körperschallgeräusche aus dem Vergleich zum Abstend der Sonden in Beziehung gesetzt wird, und daß aus dieser Beziehung der Ort des maximelen Körperschallgeräusches als Leckstelle ermittelt wird.

2. Verfehren nach Anspruch 1, dadurch gekennzeichnet, daß die Körperschallgeräusche zum Vergleich digitalisiert werden.

3. Verfahren nach Anspruch 1 oder 2, dadurch gekennzeichnet, daß die Körperschallgeräusche im Vergleich zu einem Hintergrundrauschen ermittelt werden, des mindestens über 10 Minuten gemittelt wird.

4. Verfahren nach Anspruch 1, 2 oder 3, dadurch gekennzeichnet, daß mindestens drei Sonden eines Behältersystems über eine Ringleitung miteinander verbunden werden und daß über die Ringleitung ein Alarmgeber zweifech angeregt wird.

5. Verfahren nach einem der Ansprüche 1 bis 4, dadurch gekennzeichnet, daß der Vergleich für unterschiedliche Frequenzen getrennt durchgeführt und der dabei ermittelte Ort gemittelt wird.

6. Verfahren nach einem der Ansprüche 1 bis 5, dadurch gekennzeichnet, daß der Vergleich gegenüber einem oberen festen und einem unteren und einem oberen gleitenden Schwellwert vorgenommen wird.

7. Verfahren nach einem der Ansprüche 1 bis 6, dadurch gekennzeichnet, daß die Sonden in definierten Zeitabständen durch ein bekanntes Schallsignal angeregt und anhand dieser Anregung kalibriert werden.

8. Verfahren nach Anspruch 7, dadurch gekennzeichnet, daß die kalibrierten Sonden durch ein räumlich definiertes Schallsignal angeregt werden und daß eine Ortung der Anregungsstelle vorgenommen wird.

9. Verfahren nach einem der Ansprüche 1 bis 8 zur Leckermittlung an einem Kernreaktor mit einer Hauptkühlmittelpumpe, dadurch gekennzeichnet, daß die Hauptkühlmittelpumpe bei der Ermittlung der Körperschallgeräusche abgeschaltet wird.

10. Einrichtung zur Ausübung des Verfahrens nach einem der Ansprüche 1 bis 9, wobei an einem Behälter mindestens drei Sonden (9) mit piezoelektrischen Aufnehmern angeordnet sind, deren Ausgänge über Verstärker (11) und Effektivwert bildene Voltmeter (13) mit einer Datenverarbeitungsanlage (14) in Verbindung stehen dadurch gekennzeichnet, daß die Ausgänge der Aufnehmer über eine Ringleitung (23) miteinander und mit einer Kopfstation (32) verbunden sind, daß die Kopfstation (32) als Datenverarbeitungsanlage (14) eine Auswerteelektronik (34) enthält, in der die Effektivwert zu vergleichen und zum bekannten Abstand der Sonden (9) in Beziehung zu setzen sind und daß die Auswerteelektronik (34) mindesten einen Speicher (35) zur Bildung eines Langzeitmittelwertes umfaßt und mit einem Schreiber (15) zur Ausgabe des Ortes der Leckstelle verbunden ist.

11. Einrichtung nach Anspruch 10, dadurch gekennzeichnet, daß die Ausgänge der Aufnehmer mit zwei in der Ringleitung liegenden Stationen verbunden sind.

12. Einrichtung nach Anspruch 10 oder 11, dadurch gekennzeichnet, daß den Aufnehmern Filter zur Fequenzauswahl nachgeschaltet sind.

13. Einrichtung nach Anspruch 10, 11 oder 12, dadurch gekennzeichnet, daß an dem Behälter ein Sender für ein Kalibrierungssignal
angeordnet ist.

14. Einrichtung nach Anspruch 13, dadurch
gekennzeichnet, daß ein weiterer Sender für ein
Testsignal mit einer räumlich definierten Lage
vorgesehen ist.

## Claims

1. A method of determining a leakage point in
containers under pressure comprising the steps
of positioning a plurality of probes on walls of the
container which sense high-frequency sonic
noise with the assistance of an amplifier, to form
an effective value to be compared with a
threshold value, the overshooting of which
causes a signal to be given, characterised in that
the leakage point is located by comparing
structure-borne sonic noise at at least two
probes, that the comparison of the effective
values of the structure-borne sonic noise is
related to the interval between the probes, and
that from this relationship the location of the
maximum structure-borne sonic noise is
determined as constituting the leakage point.

2. A method as claimed in Claim 1,
characrerised in that the structure-borne sonic
noise is digitalised for the comparison.

3. A method as claimed in Claims 1 or 2,
characterised in that the structure-borne sonic
noise is determined in relation to a background
noise, the mean value of which is formed over at
least ten minutes.

4. A method as claimed in Claims 1, 2 or 3,
characterised in that at least three probes of a
container system are connected to one another
via a ring line, and that an alarm device is
energised twice via the ring line.

5. A method as claimed in one of Claims 1 to 4,
characterised in that the comparison is carried
out separately for different frequencies, and that
a mean value of the locations thus determined is
formed.

6. A method as claimed in one of Claims 1 to 5,
characterised in that the comparison is carried
out in relation to an upper fixed threshold value,
and to lower and upper sliding threshold values.

7. A method as claimed in one of Claims 1 to 6,
characterised in that the probes are excited at
determinate intervals of time by a known sonic
signal, and are calibrated on the basis of this
excitation.

8. A method as claimed in Claim 7,
characterised in that the calibrated probes are
excited by a spatially-defined sonic signal and
that the excitation point is located.

9. A method as claimed in one of Claims 1 to 8
for determining leaks in a nuclear reactor
comprising a main coolant pump, characterised
in that the main coolant pump is disconnected
during the determination of the structure-borne
sonic noise.

10. A device for carrying out the method
claimed in one of Claims 1 to 9, where a container
is provided with at least three probes (9)
equipped with piezo-electric sensors and whose
outputs are connected to a data processing
system (14) via amplifiers (11) and volt-meters
(13), which form an effective value, characterised
in that the outputs of the sensors are connected
to one another and to a head station (32) via a
ring line (23), that the head station (32) comprises
as a data processing system (14), an analysis
electronics unit (34) which compares the
effective values related to the known distance
between the probes (9), and that the analysis
electronics unit (34) comprises at least one store
(35), which forms a long-term mean value, and is
connected to a printer (15) which prints out the
location of the leakage point.

11. A device as claimed in Claim 10,
characterised in that the outputs of the sensors
are connected to two stations situated in a ring
line.

12. A device as claimed in one of the Claims 10
or 11, characterised in that the outputs of the
sensors are connected to filters for the selection
of different frequencies.

13. A device as claimed in one of the Claims 10,
11 or 12, characterised in that at the container an
emitter for emitting a calibrating signal is
arranged.

14. A device as claimed in Claim 13,
characterised in that a further emitter is arranged
at a defined position for emitting a testing signal.

## Revendications

1. Procédé pour déterminer un point de fuite
dans des récipients placés sous pression,
comportant plusieurs sondes qui sont montées
sur les parois du récipient et enregistrent des
bruits à haute fréquence, à partir desquels on
forme, à l'aide d'un amplificateur, une valeur
effective que l'on compare à une valeur de seuil,
lors du dépassement de laquelle un signal est
délivré, caractérisé par le fait que pour localiser
le point de fuite, on compare entre eux les bruits
transmis par conduction dans le corps fournis par
au moins deux sondes, qu'on établit une relation
entre la valeur effective des bruits transmis par
conduction dans le corps, fournie par la
comparaison, et la distance des sondes et qu'à
partir de cette relation, on détermine, en tant que
point de fuite, l'emplacement du bruit maximum
transmis par conduction dans le corps.

2. Procédé suivant la revendication 1,
caractérisé par le fait qu'on numérise les bruits
transmis par conduction dans le corps, en vue de
la comparaison.

3. Procédé suivant la revendication 1 ou 2,
caractérisé par le fait qu'on détermine les bruits
transmis par conduction dans le corps, par
rapport à un bruit de fond, dont la moyenne est
formée au moins sur 10 minutes.

4. Procédé suivant la revendication 1, 2 ou 3, caractérisé par le fait qu'on relie entre elles au moins trois sondes d'un système formant récipient, par l'intermédiaire d'un conducteur annulaire et qu'on excite deux fois un générateur d'alarme par l'intermédiaire du conducteur annulaire.

5. Procédé suivant l'une des revendications 1 à 4, caractérisé par le fait que l'on exécute séparément la comparaison pour des fréquences différentes et que l'on forme la moyenne de l'emplacement alors déterminé.

6. Procédé suivant l'une des revendications 1 à 5, caractérisé par le fait qu'on réalise la comparaison par rapport à une valeur de seuil supérieure fixe et à une valeur de seuil inférieure et une valeur de seuil supérieure glissantes.

7. Procédé suivant l'une des revendications 1 à 6, caractérisé par le fait qu'on excite les sondes à des intervalles de temps définis, à l'aide d'un signal acoustique connu et qu'on les étalonne sur la base de cette excitation.

8. Procédé suivant la revendication 7, caractérisé par le fait qu'on excite les sondes étalonnées, à l'aide d'un signal acoustique défini dans l'espace et qu'on réalise une localisation du point d'excitation.

9. Procédé suivant l'une des revendications 1 à 8 pour la détermination de fuites dans un réacteur nucléaire comportant une pompe du circuit de refroidissement primaire, caractérisé par le fait qu'on débranche la pompe du circuit de refroidissement primaire lors de la détermination des bruits transmis par conduction dans le corps.

10. Dispositif pour la mise en oeuvre du procédé suivant l'une des revendications 1 à 9, dans lequel sur un récipient se trouvent montées au moins trois sondes (9) comportant des capteurs piézoélectriques et dont les signaux de sortie sont réunis par l'intermédiaire d'amplificateurs (11) et de voltmètres (13), fournissant une valeur effective, à une installation de traitement de données (14), caractérisé par le fait que les sorties des capteurs sont reliées entre elles et à un poste de tête (32) par l'intermédiaire d'un conducteur en anneau (23), que le poste de tête (32) contient, en tant qu'installation de traitement de données (14), un système électronique d'évaluation (34), dans lequel les valeurs effectives doivent être comparées et doivent être associées à la distance connues entre des sondes (9) et que le dispositif électronique d'évaluation (34) comporte au moins une mémoire (35) servant à former une valeur moyenne sur un long intervalle de temps et est relié à un enregistreur (15) servant à indiquer l'emplacement du point de fuite.

11. Dispositif suivant la revendication 10, caractérisé par le fait que les sorties des capteurs sont reliées à deux postes situés dans le conducteur en anneau.

12. Dispositif suivant la revendication 10 ou 11, caractérisé par le fait que des filtres servant à réaliser une sélection de fréquence sont branchés en aval des enregistreurs.

13. Dispositif suivant la revendication 10, 11 ou 12, caractérisé par le fait qu'un émetteur servant à délivrer un signal d'étalonnage est monté sur le récipient.

14. Dispositif suivant la revendication 13, caractérisé par le fait qu'un émetteur supplémentaire servant à délivrer un signal de contr*ole est prévu dans une position définie dans l'espace.

0 140 174

FIG 1

FIG 2

FIG 3

1

FIG 4

FIG 5